# EUROPÄISCHE PATENTANMELDUNG

(11) **EP 0 897 088 A2**
(43) Veröffentlichungstag der Anmeldung: **17.02.1999**
(21) Anmeldenummer: 98111329.3
(22) Anmeldetag: 19.06.1998
(51) Int. Cl.: F24D 3/14, F16L 9/12

(54) **Rohranordnung**

(30) Priorität: 14.08.1997 DE 29714548 U; 03.09.1997 DE 29715806 U
(71) Anmelder: Hewing GmbH, D-48607 Ochtrup (DE)
(72) Erfinder: Riesselmann, Franz-Josef, Dipl.-Ing., 49393 Lohne (DE); Freermann, Reinhold, 48607 Ochtrup (DE)
(74) Vertreter: Hilleringmann, Jochen, Dipl.-Ing.

(57) **Zusammenfassung**

Die Rohranordnung weist ein ein wärmeabgebendes Medium führendes Innenrohr (12), ein Außenrohr (14), das das Innenrohr (12) allseitig umgibt, und eine Abstandshaltevorrichtung (16) in dem Zwischenraum zwischen dem Innenrohr (12) und dem Außenrohr (14) auf.

## Beschreibung

Die Erfindung betrifft eine Rohranordnung zum Anschluß an einen Heizkörper.

Um in kleinen mit Heizkörpern versehenen Räumen, wie beispielsweise im Bad, eine Fußbodenheizung zu integrieren, ist es bekannt, die Rücklaufleitung des Heizkörpers als "Heizschlange" im Boden zu verlegen. Da die Temperatur des Heizungswassers für den Heizkörper weit oberhalb der Heizwassertemperaturen für Fußbodenheizungen liegt, sollte aus Sicherheitsgründen dafür gesorgt werden, daß das im Boden verlegte Rohr lediglich eine verminderte Wärmeabgabe aufweist. Heizmedien führende Rohre mit Wärmeisolierung sind grundsätzlich bekannt, (siehe z.B. hier die DE-B-20 03 222, DE-A-27 35 957 A1, DE-U-81 33 466 U1, FR-A-10 12 811, DE-A-37 08 403, DE-A-38 20 254 A1, DE-U-83 32 220 U1, DE-U-70 04 901). Allerdings ist der Aufbau dieser bekannten Rohre recht aufwendig und bedarf Spezialanfertigungen bzw. speziell ausgebildeter Rohre.

Der Erfindung liegt die Aufgabe zugrunde, eine Rohranordnung zu schaffen, die als Vorlauf- oder als Rücklaufleitung für einen Heizkörper eingesetzt werden kann und bei der in konstruktiv und herstellungstechnisch einfacher Weise unter Verwendung von an sich bekanntem Aufbau dieser bekannten Komponenten für eine verminderte Wärmeabgabe gesorgt wird.

Zur Lösung dieser Aufgabe wird mit der Erfindung eine Rohranordnung vorgeschlagen, die versehen ist mit
- einem ein wärmeabgebendes Medium führenden Innenrohr,
- einem Außenrohr, das das Innenrohr allseitig umgibt, und
- einer Abstandshaltevorrichtung in dem Zwischenraum zwischen dem Innenrohr und dem Außenrohr.

Bei der erfindungsgemäßen Rohranordnung dient ein Innenrohr zum Führen des wärmeabgebenden Mediums, d.h. das Innenrohr leitet das Heizungswasser für den Heizkörper. Das Innenrohr ist von einem Außenrohr umgeben, das im wesentlichen konzentrisch um das Innenrohr herum verläuft. Diese beiden Rohre sind mittels einer Abstandshaltevorrichtung auf Abstand gehalten, und zwar unter Einschluß von Luft bzw. Gas. Dieses Gaspolster wird zur Isolation des Innenrohres genutzt, so daß dieses über eine lediglich reduzierte Wärmeabgabe verfügt, was es ermöglicht, die erfindungsgemäße Rohranordnung in den Vorlauf bzw. Rücklauf eines Heizkörpers einzubinden und im Boden zu verlegen. Auf diese Weise verfügt der so ausgestattete Raum neben einem Heizkörper auch über eine Fußbodenheizung, ohne daß es zweier voneinander getrennter Heizkreisläufe oder eines Wärmetauschers o.dgl. bedarf.

Die erfindungsgemäße Rohranordnung ist konstruktiv und herstellungstechnisch einfach zu realisieren, da sich die Abstandshaltevorrichtung auf einfache Weise in den Herstellungsprozeß für die Rohr-in-Rohr-Anordnung integrieren läßt.

Eine bevorzugte Variante für die Ausbildung der Abstandshaltevorrichtung besteht in der Verwendung eines Wellrohres, daß das Innenrohr umgibt und das insbesondere als längs aufgeschlitztes Rohr um das Innenrohr herumgelegt ist. Hierbei ist es möglich, das Außenrohr durch anschließende Aufextrusion auf das Wellrohr zu erzeugen. Zur Erhöhung der Aufnahme von Zugkräften und zur weiteren Verbesserung der Wärmedämmung ist es vorteilhaft, an der Innenseite des Wellrohres, die dem zu isolierenden Innenrohr zugewandt ist, in axialer Richtung verlaufende Längsstege vorzusehen, insbesondere in Form von Wülsten. Alternativ ist es möglich, zwischen Innenrohr und Wellrohr ein schraubenlinienförmig angeordnetes (Rund-)Profilmaterial (z.B. Kunststoffschnur) anzuordnen bzw. einen schraubenlinienförmig verlaufenden Steg (Erhebung) an der Innenseite des Wellrohrs vorzusehen.

Ein Vorteil der vorstehend beschriebenen Variante besteht darin, daß ein "loser" Verbund aus Wellrohr und Innenrohr entsteht, der bei der Montage der Fittinge leichter handbar ist. Für die Montage muß das Innenrohr nämlich im Fittingbereich, also an seinem Anschlußende freiliegen. Für die "Wellrohrlösung" gibt es entsprechende Messer am Markt. Ein weiterer Vorteil ist darin zu erblicken, daß die Rohranordnung aus am Markt erhältlichen und einfach herstellbaren Teilen wie dem Wellrohr und dem (aufextrudierten) Außenrohr, bei dem es sich auch um einen Schlauch handeln kann, besteht.

In vorteilhafter Weiterbildung der Erfindung ist vorgesehen, daß als Abstandshaltevorrichtung eine Schaumstoffschicht insbesondere aus Polyethylen eingesetzt wird. Die Schaumstoffschicht hält infolge ihrer Zellstruktur Luft bzw. Gas im Zwischenraum zwischen dem Innenrohr und dem Außenrohr. Die Schaumstoffschicht läßt sich auf das Innenrohr aufextrudieren oder als längs aufgeschlitztes Rohr um das Innenrohr herum anordnen. Mit Vorteil kann dabei vorgesehen sein, daß das Außenrohr auf die Schaumstoffschicht aufextrudiert wird.

Alternativ zur Verwendung einer Schaumstoffschicht kann die Abstandshaltevorrichtung als um das Innenrohr gelegtes und/oder gewickeltes Gewebematerial ausgebildet sein. Auch dieses Gewebematerial hält die beiden Rohre auf Abstand, ohne daß der gesamte Zwischenraum von Gewebematerial ausgefüllt ist. Insbesondere handelt es sich bei dem Gewebematerial um grobmaschiges Gewebematerial, bei dem die einzelnen "Fäden" voneinander beabstandet sind. Das Gewebematerial liegt insbesondere als Gewebeband vor, das um das Innenrohr herumgelegt ist und dessen Längsränder miteinander verklebt oder verschweißt sind. Dabei können die Längsränder aneinanderstoßen oder einander überlappen.

Zur Erhöhung des Anteils an im Zwischenraum zwischen den beiden Rohren befindlichem Gas bzw. befindlicher Luft ist es von Vorteil, wenn das Gewebematerial wellenförmig oder zickzackförmig oder in anderer Weise mit Erhebungen und Vertiefungen versehen ist.

Auch bei Verwendung von Gewebematerial als Abstandshaltevorrichtung ist es möglich, das Außenrohr auf die Gewebemateriallage aufzuextrudieren.

Eine weitere Alternative für die Ausbildung der Abstandshaltevorrichtung der erfindungsgemäßen Rohranordnung besteht darin, eine Rund-Profilmaterial, insbesondere eine Schnur, schraubenlinienförmig um das Innenrohr herumzuwickeln. Auch bei dieser Alternative ist es möglich, das Außenrohr anschließend aufzuextrudieren.

Für sämtliche der zuvor genannten alternativen Ausgestaltungen der Abstandshaltevorrichtung gilt, daß als Material für die Abstandshaltevorrichtung Kunststoffmaterial eingesetzt wird, so daß der Wärmeübergang über das Material der Abstandshaltevorrichtung, das sowohl das Innenrohr als auch das Außenrohr kontaktiert, so gering wie möglich ist.

Nachfolgend werden anhand der Figuren Ausführungsbeispiele der Erfindung näher erläutert. Im einzelnen zeigen:
- Fig. 1: einen Querschnitt durch ein Fußbodenheizungsrohr mit einem Innenrohr, einem Außenrohr und einer dazwischen angeordneten Gewebeschicht zur Abstandshalterung beider Rohre,
- Fig. 2: schematisch die Herstellung eines Fußbodenheizungsrohres gemäß Fig. 1,
- Fig. 3: einen Längsschnitt durch ein Fußbodenheizungsrohr mit einem Innenrohr und einem Außenrohr sowie einem zwischen beiden angeordneten Wellrohr zur Abstandshalterung beider Rohre,
- Fig. 4: schematisch die Herstellung eines Fußbodenheizungsrohres gemäß Fig. 3,
- Fig. 5: einen Querschnitt durch ein Fußbodenheizungsrohr mit einem Innenrohr, einem Außenrohr und zwischen beiden schraubenlinienförmig verlaufendem Rund-Profilmaterial zur Abstandshalterung beider Rohre,
- Fig. 6: schematisch die Herstellung eines Fußbodenheizungsrohres gemäß Fig. 5,
- Fig. 7: einen Querschnitt durch ein Fußbodenheizungsrohr mit einem Innenrohr und einem Außenrohr sowie einer zwischen beiden angeordneten Schaumstoffschicht zur Abstandshalterung und
- Fig. 8: schematisch die Herstellung eines Fußbodenheizungsrohres gemaß Fig. 7.

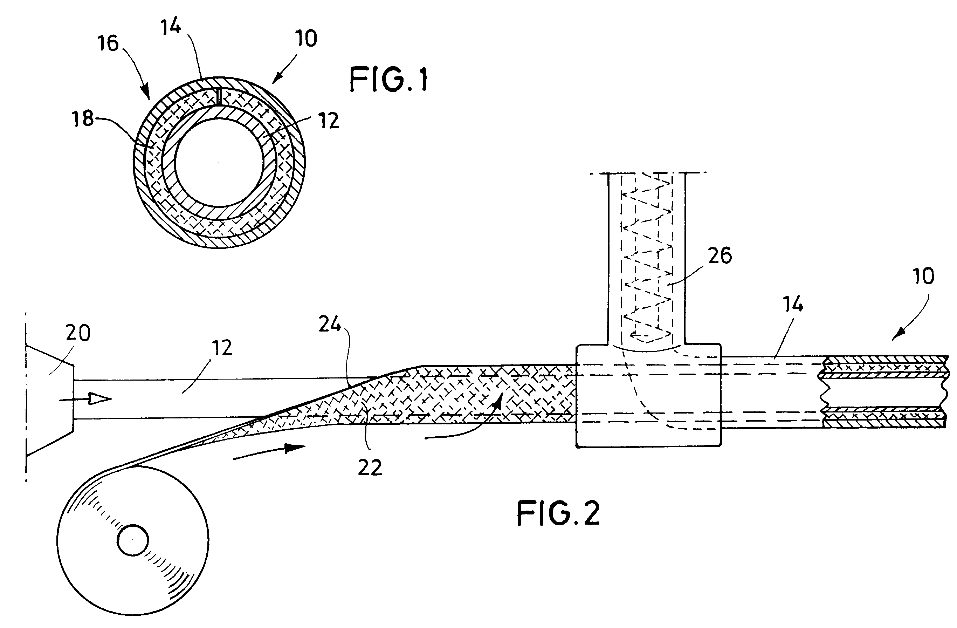

In Fig. 1 ist im Querschnitt ein erstes Ausführungsbeispiel einer Rohranordnung 10 dargestellt. Die Rohranordnung 10 weist ein medienführendes Innenrohr 12 und ein dieses im wesentlichen koaxial umgebendes Außenrohr 14 auf. Beide Rohre bestehen aus Kunststoff. Zwischen beiden Rohren befindet sich eine Abstandshaltevorrichtung 16, die in diesem Fall als Gewebemateriallage 18 ausgebildet ist. Auch diese Gewebemateriallage 18 besteht aus Kunststoffmaterial.

In Fig. 2 ist schematisch dargestellt, wie die Rohranordnung 10 online hergestellt werden kann. Zunächst wird mittels eines Extruders 20 das Innenrohr 12 extrudiert. Ein mit dem Innenrohr 12 mitlaufendes Gewebeband 22 wird um das Innenrohr 12 herumgelegt, wobei die Längsränder 24 des Gewebebandes 22 miteinander verbunden sind bzw. lediglich aneinander stoßen oder einander überlappen. Anschließend wird mittels eines weiteren Extruders 26 das Außenrohr 14 aufextrudiert. Im rechten Teil der Fig. 2 ist die so hergestellte Rohranordnung 10 nochmals im Längsschnitt gezeigt.

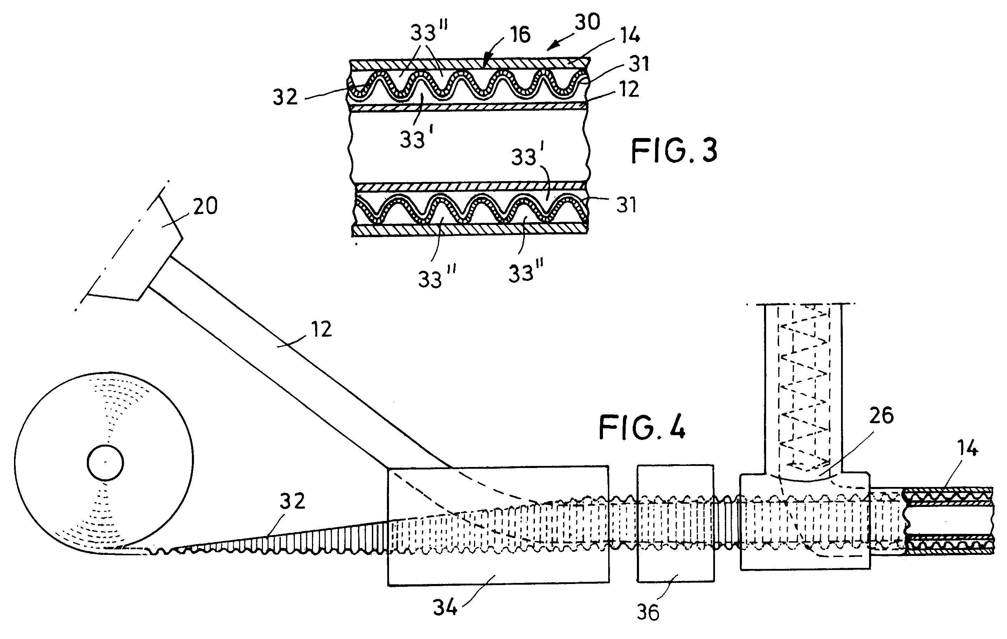

In Fig. 3 ist ein Längsschnitt durch ein zweites Ausführungsbeispiel einer Rohranordnung 30 gezeigt. Soweit die Teile dieser Rohranordnung 30 denjenigen der Rohranordnung 10 der Fign. 1 und 2 entsprechen, sind sie mit den gleichen Bezugszeichen versehen.

Die Rohranordnung 30 weist ein medienführendes Innenrohr 12 und ein Außenrohr 14 auf, die beide aus Kunststoff bestehen und voneinander beabstandet sind. Zwischen beiden Rohren 12,14 befindet sich eine Abstandshaltevorrichtung 16, bei der es sich bei diesem Ausführungsbeispiel um ein Kunststoff-Wellrohr 32 handelt, auf dessen Innenseite längslaufende wulstförmige Erhebungen 31 (allgemein Stege) angeordnet sind, die von außen von dem Innenrohr 12 beabstandet sind. Das Innenrohr liegt je nach Lage nur punktuell an. Durch die Längserhebungen 31 bildet sich ein Zwischenraum 33' zwischen dem Innenrohr 12 und dem Wellrohr 32, während sich zwischen dem Wellrohr 32 an dem Außenrohr 14, bei dem es sich um einen Schlauch handeln kann, ein zweiter Zwischenraum 33'' bildet (im Bereich der "Täler" des Wellrohres). Beide Zwischenräume sorgen für eine gute Wärmeisolierung, so daß die für die Heizkörperanbindung verwendete und zu einem Heizkörper führende bzw. von diesem kommende Rohranordnung 30 gleichzeitig auch als Fußbodenheizungsrohr eingesetzt werden kann.

Fig. 4 zeigt schematisch den Herstellungsablauf der Rohranordnung 30 gemäß Fig. 3. Über einen Extruder 20 wird das Innenrohr 12 extrudiert. Mit dem Innenrohr 12 wird das Wellrohr 32 zugeführt, das in einer Ummantelungsstation 34 längs aufgeschlitzt und aufgeweitet wird, so daß das Innenrohr 12 in das Wellrohr 32 eingelegt werden kann. Danach kann das Wellrohr 32 wieder verschlossen werden, was beispielsweise durch Verschweißen oder Verkleben erfolgt. Der Verschluß des Längsschlitzes des Wellrohres 32 ist aber für die Funktion der Rohranordnung 30 nicht zwingend erforderlich. Mittels eines Extruders 26 wird dann anschließend auf das Wellrohr 32 das Außenrohr 14 aufextrudiert. Die Scheiteldruckfestigkeit der Fußbodenheizungsrohranordnung 30 (Stabilität beim Betreten mit dem Fuß) erhöht sich ganz entscheidend, wenn das Wellrohr 32 längs seines Schlitzes wieder verschweißt wird. Hierfür ist eine Schweißstation 36 vorgesehen, die - bezogen auf die Produktionslinie gemäß Fig. 4 - zwischen der Wellrohrummantelungsstation 34 und dem Extruder 26 angeordnet ist.

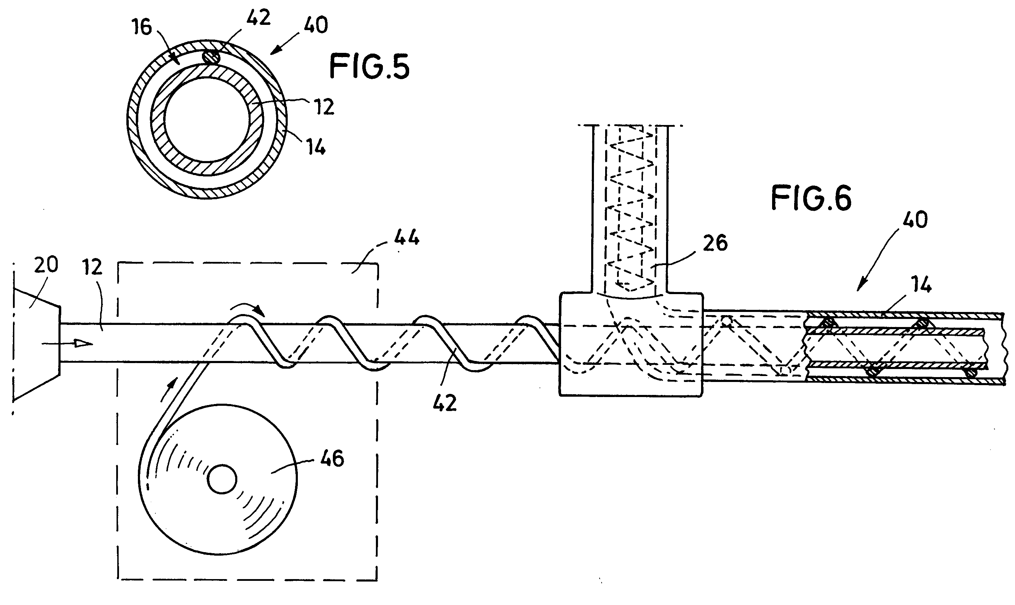

In Fig. 5 ist ein Querschnitt durch ein drittes Ausführungsbeispiel einer Rohranordnung 40 gezeigt. Auch hier gilt, daß die für dieses Ausführungsbeispiel verwendeten Bezugszeichen gleich denen der Fign. 1 und 2 sind, sofern mit diesen Bezugszeichen gleiche bzw. funktionsgleiche Teile bezeichnet sind.

Die Rohranordnung 40 umfaßt ein medienführendes Innenrohr 12 aus Kunststoff sowie ein Kunststoff-Außenrohr 14, das das Innenrohr 12 mit Abstand umgibt. Zur Abstandshalterung ist im Zwischenraum zwischen den beiden Rohren 12,14 eine Abstandshaltevorrichtung 16 angeordnet, bei der es sich um eine schraubenlinienförmig um das Innenrohr 12 gewickelte Kunststoffschnur 42 handelt.

Fig. 6 zeigt schematisch eine Anlage zur Herstellung der Rohranordnung 40 gemäß Fig. 5. Ein Extruder 20 extrudiert das Innenrohr 12, das in einem Wickelautomaten 44 mit der Kunststoffschnur 42 schraubenlinienförmig umwickelt wird. Die Kunststoffschnur 42 wird von einer Vorratsrolle 46 abgewickelt. Anschließend durchläuft das derart mit der Kunststoffschnur 42 umwickelte Innenrohr 12 einen Extruder 26, durch den das Außenrohr 14 auf die wendelförmige Kunststoffschnur 42 aufextrudiert wird. Im rechten Teil von Fig. 6 ist aufgebrochen ein Längsschnitt durch die Rohranordnung 40 gezeigt.

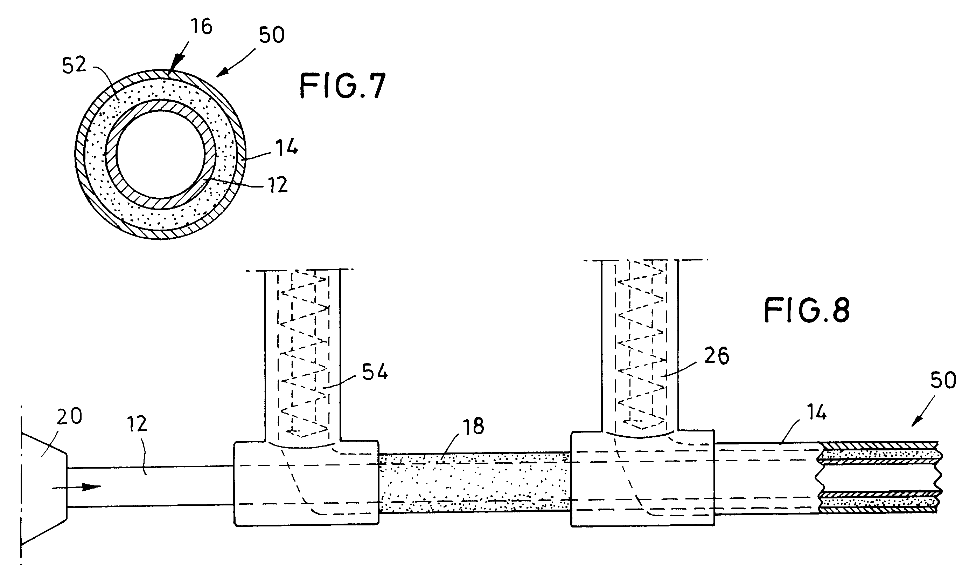

Ein letztes Ausführungsbeispiel für eine Rohranordnung 50 ist in den Fign. 7 und 8 gezeigt. Soweit die Teile dieser Rohranordnung 50 denjenigen der Fign. 1 und 2 entsprechen, sind sie mit den gleichen Bezugszeichen versehen.

Die Rohranordnung 50 besteht aus einem Kunststoff-Innenrohr 12, das das wärmeabgebende Medium führt. Mit Abstand um das Innenrohr 12 herum ist ein Kunststoff-Außenrohr 14 angeordnet, das mittels einer Abstandshaltevorrichtung 16 auf Abstand zum Innenrohr 12 gehalten ist. Bei diesem Ausführungsbeispiel der Rohranordnung 50 ist die Abstandshaltevorrichtung 16 als Schaumstoffschicht 52 aus PE-Material ausgeführt.

Fig. 8 zeigt schematisch eine Anlage zur Online-Herstellung der Rohranordnung 50 gemäß Fig. 7. Das Innenrohr 12 wird mittels eines Extruders 20 extrudiert. Durch einen zweiten Extruder 54 wird das Schaumstoffmaterial 52 außen auf das Innenrohr 12 aufextrudiert. Anschließend erfolgt in einem Extruder 26 die Herstellung des Außenrohres 14, das auf die Schaumstoffschicht 52 von außen aufextrudiert wird. Im rechten Teil der Fig. 8 ist aufgebrochen ein Längsschnitt durch die so hergestellte Rohranordnung 50 gezeigt.

Sämtlichen Rohranordnungen 10,30,40,50 gemeinsam ist die Tatsache, daß durch eine Abstandshaltevorrichtung 16 dafür gesorgt wird, daß das Außenrohr 14 unter Einschluß von Luft oder einem anderen Gas im Zwischenraum zwischen den beiden Rohren auf Abstand zum Innenrohr 12 gehalten wird. Als Material für die Abstandshaltevorrichtungen 16 wird stets Kunststoff eingesetzt, was eine vergleichsweise schlechte Wärmeleitfähigkeit aufweist. Zusammen mit der Tatsache, daß Luft ein guter Wärmeisolator ist, ergibt sich damit ein recht wirkungsvoller Aufbau für eine Rohranordnung mit verminderter Wärmeabgabe (siehe insbesondere die Ausführungsform gemäß Fign. 3 und 4), die demzufolge als Vorlauf- und/oder als Rücklaufrohrleitung für die Heizkörperanbindung eingesetzt werden kann, so daß auf diese Weise in dem betreffenden Raum neben einem Heizkörper auch eine Fußbodenheizung ohne großen Aufwand installiert werden kann.

## Patentansprüche

1. Rohranordnung mit
- einem ein wärmeabgebendes Medium führenden Innenrohr (12),
- einem Außenrohr (14), das das Innenrohr (12) allseitig umgibt, und
- einer Abstandshaltevorrichtung (16) in dem Zwischenraum zwischen dem Innenrohr (12) und dem Außenrohr (14).

2. Rohranordnung nach Anspruch 1, dadurch gekennzeichnet, daß die Abstandshaltevorrichtung (16) ein das Innenrohr (12) umgebendes Wellrohr (32) ist.

3. Rohranordnung nach Anspruch 2, dadurch gekennzeichnet, daß das Wellrohr (32) längslaufende Stege (31) auf seiner dem Innenrohr (12) zugewandten Innenseite aufweist.

4. Rohranordnung nach Anspruch 3, dadurch gekennzeichnet, daß die Stege (31) als wulstförmige Innenerhebungen ausgebildet sind.

5. Rohranordnung nach Anspruch 2, dadurch gekennzeichnet, daß zwischen dem Wellrohr (32) und dem Innenrohr (12) ein schraubenlinienförmiges um das Innenrohr gewickeltes Profilmaterial, insbesondere Rund-Profilmaterial angeordnet ist.

6. Rohranordnung nach einem der Ansprüche 2 bis 5, dadurch gekennzeichnet, daß das Wellrohr (32) als längs aufgeschlitztes Rohr um das Innenrohr (12) gelegt ist.

7. Rohranordnung nach Anspruch 1, dadurch gekennzeichnet, daß die Abstandshaltevorrichtung (16) ein um das Innenrohr (12) gelegtes und/oder gewickeltes Gewebematerial (18) ist.

8. Rohranordnung nach Anspruch 7, dadurch gekennzeichnet, daß das Gewebematerial (18) ein Gewebeband (22) ist.

9. Rohranordnung nach Anspruch 8, dadurch gekennzeichnet, daß das Gewebeband (22) längs verklebt oder längs verschweißt ist.

10. Rohranordnung nach einem der Ansprüche 7 bis 9, dadurch gekennzeichnet, daß das Gewebematerial (18) wellen- oder zickzackförmig ist.

11. Rohranordnung nach Anspruch 1, dadurch gekennzeichnet, daß die Abstandshaltevorrichtung (16) ein schraubenlinienförmig um das Innenrohr (12) gewickeltes Rund-Profilmaterial (42) ist.

12. Rohranordnung nach Anspruch 11, dadurch gekennzeichnet, daß das Rund-Profilmaterial (42) eine Schnur ist.

13. Heizkörperanbindung mit
- einem Heizkörper,
- einer zu dem Heizkörper führenden Vorlaufrohrleitung und
- einer von dem Heizkörper aus verlaufenden Rücklaufrohrleitung,
**dadurch gekennzeichnet,**
- daß die Vorlauf- und/oder Rücklaufrohrleitung als eine im Fußboden verlegte Rohranordnung (10;30;40;50) nach einem der vorhergehenden Ansprüche ausgebildet ist.
